# EUROPEAN PATENT APPLICATION

(11) **EP 1 045 368 A2**
(43) Date of publication of application: **18.10.2000**
(21) Application number: 00201345.6
(22) Date of filing: 14.04.2000
(51) Int. Cl.: G09F 13/22

(54) **Luminous sign**

(30) Priority: 15.04.1999 ES 9900955 U
(71) Applicant: Oriel Tecnologicas S.A., 08630 Abrera, Barcelona (ES)
(72) Inventor: Procupetz, Gabriel, 08034 Barcelona (ES)
(74) Representative: Aguilar Forment, Domènec

(57) **Abstract**

This sign comprises at least: an insulating layer (11) that acts as a support, a first conducting track (12), a layer (13) of insulating material, a layer (14) of dielectric insulating polymer, an electroluminescent layer (15) formed by a mixture of phosphor, solvents, and polymers, a second conducting track (16) and optionally a layer (17) of coloured translucent material that acts as a optical filter. The conducting tracks (12 and 16) are preferably made of silver or carbon polymers and are coupled to an electrical connector (2) for connection of the sign (1) to a source of a low amperage direct current power supply to light up the electroluminescent layer (15).

## Description

### OBJECT OF THE INVENTION

The present invention refers, as the title indicates, to a luminous sign composed of several thin layers of different materials, one of which is composed of a mixture of products including an electroluminescent substance that emits light upon the application of an electrical current.

### SCOPE OF THE INVENTION

The luminous sign object of this invention is applicable to different sectors, such as: advertising, signs and decoration.

### BACKGROUND TO THE INVENTION.

Luminous signs include means of lighting such as: neon tubes, fluorescent tubes, incandescence lamps or LED's (light emitting diodes); these signs, apart from being considerably thick and heavy (which in some cases limits their application), have a high energy consumption and are therefore expensive to use.

### DESCRIPTION OF THE INVENTION

The luminous sign of the invention has been devised to resolve these problems. It presents a series of features in its construction that provide it with certain advantages compared to conventional luminous signs. Some of these advantages are those listed below:
- Laminar format, with a thickness from 0.2 mm on.
- Extremely reduced weight and volume.
- Easy to install.
- Possibility of being adjusted to curved surfaces, and of being fixed or adhered to such surfaces.
- Minimum energy consumption, approximately 2 watts.
- Operation at low amperage, without any danger of electrocution.
- Production of cold light, preventing any overheating of materials, burns or fires.
- Possibility of connection of several signs in series.

According to the invention, this sign is composed of an insulating layer that acts as a support, a first conducting track, a layer of insulating material, a layer of dielectric insulating polymers, an electroluminescent layer, a second conducting track and, optionally, a layer of coloured translucent material that acts as an optical filter.

Preferably, the conducting tracks are made of silver or carbon polymers, and are connected to an electrical connector placed on one side of the sign. The purpose of this connection is to connect the sign to a low amperage power supply; which in turn is connected to the mains power supply network through a transformer.

The layer of electroluminescent material may occupy part or the whole of the surface of the sign, defining shapes as, for example, different figures, motives or icons; letters, e.g., logotypes or company names; indications, such as traffic signs, commercial, informative or decorative signs, or any other motive that is to be illuminated.

This layer of electroluminescent material consists of a mixture of phosphorus, solvents (e.g., acetone based) and polymers designed to bond the different molecules to each other. This layer can be applied using printing techniques obtaining a very reduced thickness.

The presence of phosphorus in the composition of the electroluminescent layer means that when an electrical current is applied the areas containing this component emit light, independently of their format, location, etc.

The layers of insulating material and the layer of dielectric insulating polymers are located between the electroluminescent layer and one of the conducting tracks, while the other conducting track remains in contact with the electroluminescent layer.

The application of current to the luminous sign can be controlled by an electronic circuit so that the electroluminescent layer is illuminated continuously, sequentially or intermittently.

The conducting tracks are displaced to one side of each other to prevent their coming into contact in those areas of the sign where there is no electroluminescent layer, insulating layer and dielectric insulator layer.

The distribution of the different layers may vary, for example the layer of conductive plastic may be replaced by plastic insulation printed with a translucent or transparent conductive liquid.

The insulating layers may vary according to the product.

### DESCRIPTION OF THE FIGURES

To further complement the description of the invention and with in order to aid in understanding its characteristics, this descriptive report is accompanied by a series of drawings that, with illustrative character only and in no way limiting, represent the following:
- Figure 1 shows a front view of the luminous sign with the corresponding transformer. The electroluminescent layer is located in defined zones corresponding to the arrows drawn on the sign.
- Figure 2 shows a cross section of the sign. The different layers and tracks have been shown separated for greater clarity.

### PREFERRED EMBODIMENT OF THE INVENTION

As can be seen in the figures, the assembly of the luminous sign (1) includes a first insulating layer (11) that acts as a support to provide a certain rigidity to the sign, a first conducting track (12), a layer (13) of insulating material, a layer (14) of dielectric insulating polymer, an electroluminescent layer (15), a second conducting track (16) and a layer (17) of coloured translucent material that acts as a filter.

The insulating layer (11), preferably made from a plastic material, can have a thickness of as little as about 0.2 millimetres, to allow it to be adjusted and mounted on flat or curved surfaces.

The conducting tracks (12 and 16) are made of silver or carbon polymers. The first is located between the insulating layers (11) and (13) and the other is in contact with the electroluminescent layer (15).

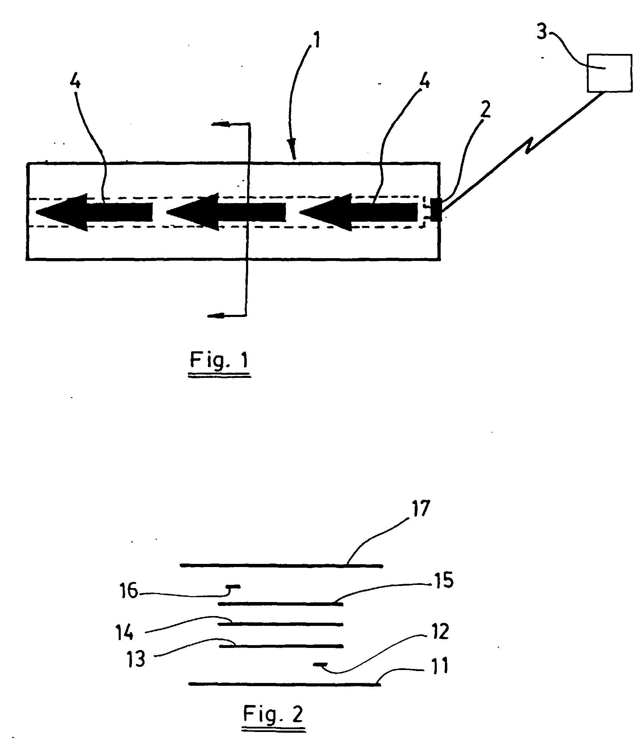

These tracks (12 and 16) are coupled to an electrical connector (2) providing a supply of electrical current to the sign (1). Figure 1 also shows a transformer (3) connected to the mains electrical supply network.

The layer (15) of electroluminescent material is formed by a mixture of phosphorus, solvent, and polymers; the presence of phosphorus in this layer is what makes the sign emit light on the application of an electrical current.

In the sample shown, the layers (13,14 and 15) only occupy the surface of the sign corresponding to the arrows (4), these arrows are illuminated by passing an electrical current along the conducting tracks (12 and 16).

It would be redundant to further extend this description as any expert in this field can understand the scope of the invention and the advantages that it provides.

The materials, shape, size and distribution of the elements described will be susceptible of variation provided that this does not suppose any alteration of the essential characteristics of the invention, as claimed below.

## Claims

1. Luminous sign, of the type used in various fields such as advertising, decoration or signing, characterised in that it comprises, at least, one insulating layer (11) that acts as a support, a first conducting track (12), a layer (13) of insulating material, a layer (14) of dielectric insulating polymer, a layer (15) of electroluminescent material, a second conducting track (16) and, optionally, a layer (17) of translucent coloured material that functions as an optical filter.

2. Sign, according to the previous claim, characterised by conducting tracks (12 and 16) preferably made from silver or carbon polymers.

3. Sign, according to the previous claims, characterised by a layer (15) of electroluminescent material which may occupy a part or the whole of the surface of the sign (1).

4. Sign, according to the previous claims, characterised by a layer (15) of electroluminescent material which consists of a mixture of phosphorus, solvent, and polymers.

5. Sign, according to the previous claims, characterised in that an insulating layer (11) that acts as a support is made of plastic material.

6. Sign, according to the previous claims, characterised by conducting tracks (12 and 16) connected to an electrical connector (2) for connection of the sign (1) to a source of a low amperage direct current power supply.

7. Sign, according to the previous claims, characterised by a layer (13) of insulating material and the layer (14) of dielectric insulating polymers located between the electroluminescent layer (15) and the conducting track (12).

8. Sign, according to the previous claims, characterised in that a conducting track (16) is in contact with the electroluminescent layer (15).

9. Sign, according to the previous claims, characterised by conducting tracks (12 and 16) displaced sideways from each other to prevent any contact in those areas of the sign that do not have the electroluminescent layer (15), the insulating layer (14) and the layer (13) of dielectric insulator.
